# EUROPEAN PATENT SPECIFICATION

(11) **EP 3 960 941 B1**
(45) Date of publication and mention of the grant of the patent: **04.12.2024**
(21) Application number: 21192639.9
(22) Date of filing: 23.08.2021
(51) Int. Cl.: E03C 1/02, F16K 11/04, F16K 31/524

(54) **FLUID CONTROL DEVICE**
FLUIDSTEUERUNGSVORRICHTUNG
DISPOSITIF DE RÉGULATION DE FLUIDES

(30) Priority: 27.08.2020 GB 202013496
(43) Date of publication of application: 02.03.2022
(73) Proprietor: Kohler Mira Limited, Cheltenham, Gloucestershire GL52 5EP (GB)
(72) Inventor: LEA, Benjamin, Cheltenham, Gloucestershire GL52 5EP (GB); GRIFFITHS, Daniel Paul, Cheltenham, Gloucestershire GL52 5EP (GB); RISBEY, Toby, Cheltenham, Gloucestershire GL52 5EP (GB)
(74) Representative: Barker Brettell LLP

(56) References cited:
- WO-A1-00/46535
- JP-A- H0 694 145
- US-A- 3 563 468
- US-A- 4 662 399
- US-A1- 2017 343 130

## Description

The present disclosure relates to a fluid control device for an ablutionary fitting. The disclosure also relates to systems, e.g. ablutionary systems, comprising such a fluid control device.

A fluid control device for an ablutionary fitting typically may comprise one or more valves, which can be operated by a user pressing a button or similar control member which acts on a mechanical actuator. The valve(s) may be operable to allow or prevent flow to an outlet. In an ablutionary system a fluid delivery device such as a shower head or faucet may be downstream of, and in fluid communication with, the outlet.

Opening and closing the valve typically requires overcoming a water pressure. The magnitude and direction of the force required to open the valve can, for example, limit design freedom when positioning a control member of the fluid control device in relation to the valve.

US 2017/343130 discloses a valve mechanism comprising a tubular housing. An activating and activated cylinder engage to drive a rod and sealing member.

US 4662399 discloses a valve arrangement including a lever comprising a cam surface and a cylinder comprising two valve members.

JP H06 94145 discloses a valve device comprising a rotary member having an angled surface, wherein the angled surface is in contact with a pair of rockers that may act to open and close two valves.

A first aspect provides a fluid control device for an ablutionary fitting comprising:
a rotary control member comprising a cam surface;
a first valve comprising a valve member;
a first valve actuator; and
a first operating member;
wherein, in use, the rotary control member is rotatable such that the cam surface drives the first operating member in a linear direction and the first operating member acts in turn on the first valve actuator to move the valve member from an open position to a closed position and vice versa, wherein the cam surface is configured such that, by rotating the rotary control member, in use, a user can select whether the first valve is open or closed; and
wherein the first valve actuator comprises a control lever; and
wherein the operating member comprises a first end and a second end, wherein the first end is arranged to contact the cam surface and the second end is arranged to contact the first valve actuator.

Advantageously, a rotary control member comprising a cam surface may allow for a user to control the operation of a valve member by providing a relatively smaller force and/or by providing a smaller rotation. Accordingly, the first valve may be a "low-force" valve. Being able to employ a low-force valve may be beneficial, for example, for less strong or less manually dextrous users.

The first valve actuator comprises a separate distinct member to the first operating member. The first valve actuator may be operable to move in the same linear direction as the first operating member. The first valve actuator and the first operating member may be arranged to move along the same linear axis. The first valve actuator and the first operating member may be arranged to move in the same linear direction along parallel linear axes.

The first valve may comprise a first valve outlet. The valve may be configured such that when in the open position the valve member is arranged to allow fluid flow through the first valve outlet, while in the closed position the valve member is arranged to prevent fluid flow through the first valve outlet.

The rotary control member may be adapted in any suitable way to assist the user in rotating the rotary control member. For example, the rotary control member may comprise a lever, a handle or the like.

The cam surface may comprise a series of peaks and troughs, including at least one peak and at least one trough. For example, the cam surface may comprise a regular, or an irregular, pattern of peaks and troughs. The cam surface may be configured such that any suitable angle of rotation moves the valve member from the open position to the closed position or vice versa. The cam surface may be arranged such that when a user rotates the rotary control member through up to or at least 30°, up to or at least 45°, up to or at least 60°, up to or at least 90°, up to or at least 120° or up to 180°, for example, the valve member moves from the open to closed position, or vice versa.

The rotatable control member may be rotated freely through 360° or more either clockwise or anti-clockwise. The rotatable control member may be rotatable through a limited arc in either direction. The limited arc may be, for example, up to 360°, up to 270°, up to 180°, up to 120° or up to 90° in either direction.

The operating member may comprise an elongate member. The operating member may comprise a rigid elongate member.

The operating member may comprise an irregular shape such that the second end is arranged to move linearly along an axis parallel to the axis along which the first end is arranged to move.

The operating member may be biased, e.g. resiliently biased, in a direction towards the rotary control member. The operating member may be resiliently biased in a direction towards the rotary control member by one or more resilient members, e.g. a spring, a deformable member or the like.

The fluid control device may comprise a support frame configured to at least partially surround the operating member. The support frame may substantially entirely surround the operating member. The support frame may be configured such that it does not interfere with linear movement of the operating member. The support frame may be configured such that it substantially prevents movement of the operating member in one or more directions perpendicular to the direction of linear movement.

Conveniently, the rotary control member may be disposed away from the first valve.

The control lever may comprise a lever arm extending from near to or at a first end of a shaft. The lever arm may extend perpendicularly from the shaft. The control lever may be fixedly connected to the shaft such that rotation of the control lever causes rotation of the shaft, and vice versa.

The shaft may comprise an elongate member extending from the first end to a second end. The shaft may be arranged to rotate about the longitudinal axis of the shaft. The shaft may be arranged such that the second end extends underneath a portion of the valve member.

A second control lever may extend from near to or at the second end of the shaft. The second control lever may comprise a lever arm extending away from the shaft. The lever arm of the first control lever may be parallel to the lever arm of the second control lever. The second control lever may be fixedly attached to the shaft such that rotation of the shaft causes rotation of the second control lever, and vice versa.

At least a portion of the second control lever may abut a surface of the valve member. The second control lever may be arranged such that movement of the second control lever causes movement of the valve member.

The valve member may be operable to move linearly along a single axis between an open and closed position. The valve member may be arranged to seal and unseal the first valve outlet.

The second control lever may be arranged to abut a surface of a further valve member. The further valve member may comprise a diaphragm valve. The diaphragm valve may be arranged to move between an open and closed position. The second control lever may be arranged to move the diaphragm valve between an open and closed position.

When in the open position, the diaphragm valve may allow water to flow therethrough and towards the valve member. The flow of water may force the valve member from the closed position to the open configuration.

A smaller force may be required to open the diaphragm valve than to open the valve member. Advantageously, a smaller force may be applied by a user in order to open the diaphragm valve wherein the flow of water then provides the force required to open the valve member.

The diaphragm valve and/or the valve member may be biased towards the closed configuration. The biasing means may comprise a resiliently deformable member such as a spring, for example. The diaphragm valve may comprise a diaphragm member arranged to be resiliently biased towards the closed configuration.

When in the closed configuration the valve member may be configured to prevent the passage of fluid from the valve outlet. When in the open configuration the valve member may allow the passage of fluid from the valve outlet.

The fluid control device may comprise one or more further valves, e.g. a second valve. The or each further valve, e.g. the second valve, may be arranged similarly to the first valve such that, in use, the rotary control member is rotatable such that the cam surface drives a further, e.g. second, operating member in a linear direction and each further, e.g. second, operating member acts in turn on a further, e.g. second, valve actuator to move a further, e.g. second, valve member from an open position to a closed position and vice versa, wherein the cam surface is configured such that, by rotating the rotary control member, in use, a user can select whether the further, e.g. second, valve is open or closed.

For example, the cam surface may be arranged such that a user can select whether either, or both, of the first and second valves are open or closed.

The fluid control device may comprise a mixer valve. The mixer valve may be arranged to receive a flow of hot water and a flow of cold water. The mixer valve may be operable to control the flow of fluid therethrough and may be operable to control the temperature of the fluid flowing through a mixer valve outlet.

The first valve and, if present, further, e.g. second, valves may be arranged to receive a flow of water from the mixer valve. The mixer valve may comprise a single outlet arranged to provide a flow of fluid to both the first and further, e.g. second, valves.

The first and further, e.g. second, valves may each be arranged to provide a flow of fluid to a different fluid delivery device. The first and second valves may be arranged to provide a flow of fluid to a handheld shower spray head and a fixed shower spray head or spray plate, for example.

A second aspect provides an ablutionary fitting comprising a fluid control device according to the first aspect.

A third aspect provides an ablutionary system comprising:
a fluid control device according to the first aspect; and
a fluid delivery device downstream of the fluid control device.

Except where mutually exclusive, any of the features of any of the above described aspects may be employed mutatis mutandis in any of the other above described aspects.

Example embodiments will now be described with reference to the accompanying drawings, in which:
Figure 1 is a perspective view of an example embodiment of a fluid control device;
Figure 2 is a perspective view of the fluid control device of Figure 1 with some parts removed;
Figure 3 is a cross-sectional view through the fluid control device of Figure 1;
Figure 4 is a cross-sectional view of a valve employed in the flow control device of Figure 1;
Figure 5 shows the fluid control device 1 with a valve in an open position; and
Figure 6 shows the fluid control device 1 with a valve in a closed position.
Figure 7 shows schematically an example of a rotary control member;
Figure 8 shows the rotary control member of Figure 7 with two operating members;
Figure 9 shows the rotary control member of Figure 8 in a position rotated 85° anticlockwise from a central position;
Figure 10 shows the rotary control member of Figure 8 in the central position;
Figure 11 shows the rotary control member of Figure 8 in a position rotated 85° clockwise from a central position;
Figure 12 shows an example of an ablutionary system comprising a fluid control device according to the present disclosure.
Figure 13 shows a side view of a rotary control member with two operating members; and
Figure 14 shows a perspective view of the rotary control member with two operating members of Figure 13.

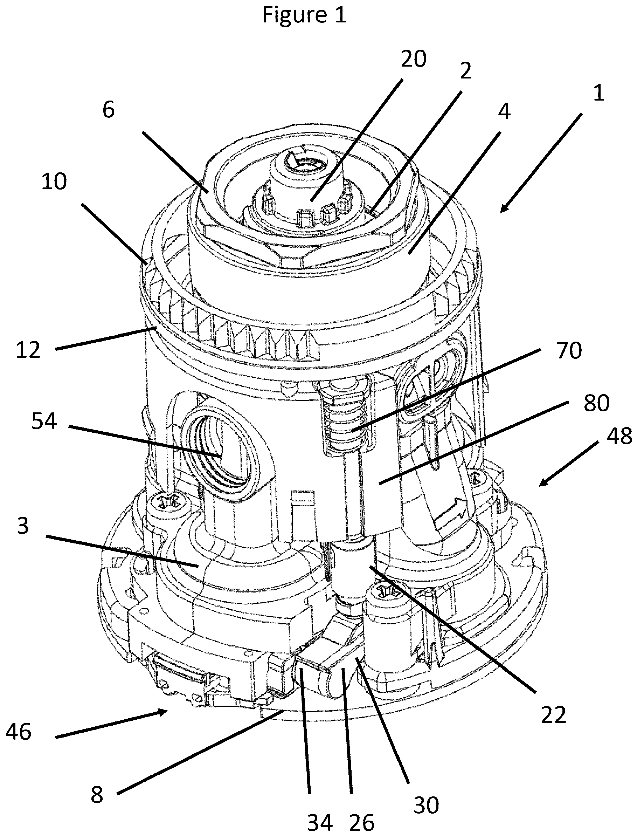

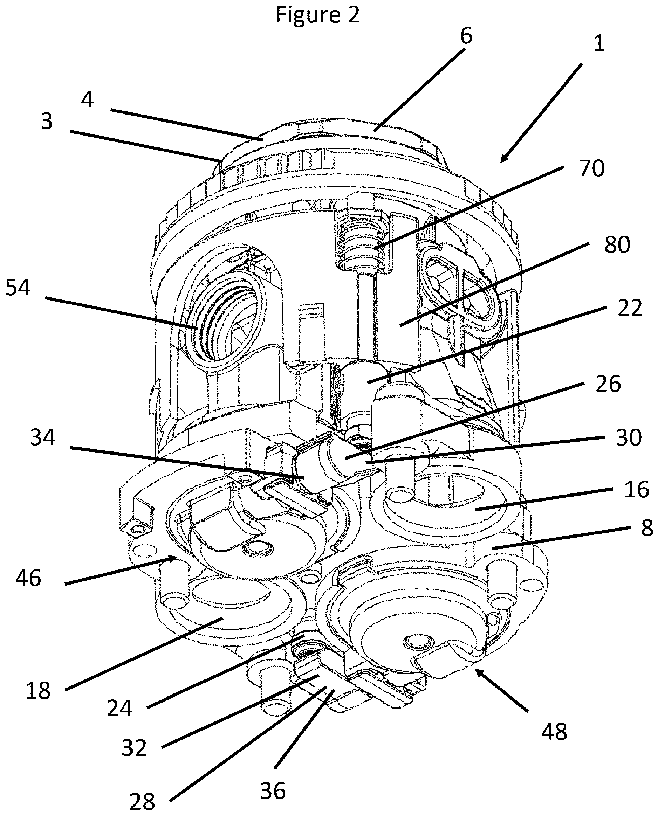

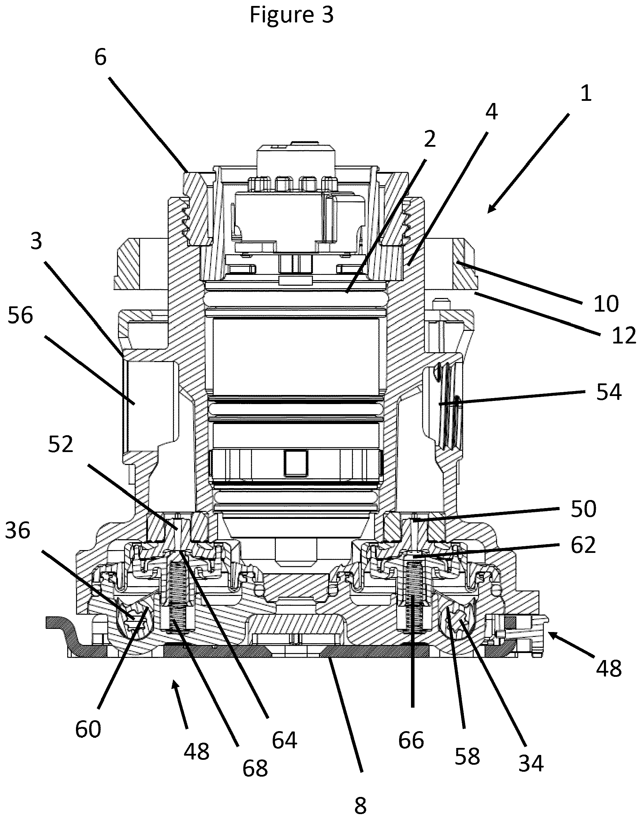

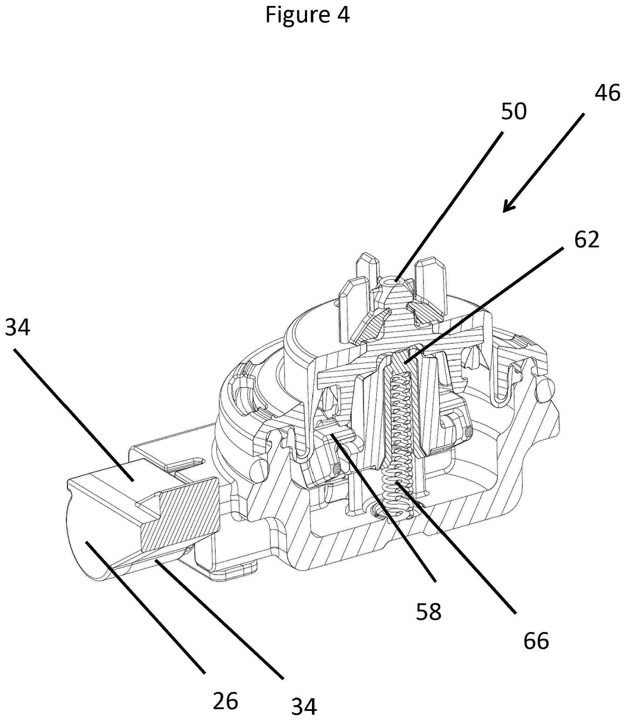

Referring to Figures 1 to 6, a fluid control device 1 for an ablutionary fitting is shown. The fluid control device 1 is operable to control, in use, fluid flow and temperature to two fluid delivery devices downstream of the fluid control device 1.

The fluid control device 1 comprises a thermostatic mixer valve 2 disposed within a body 3. The body 3 has a first end 6 and a second end 8. Near the first end 6 of the body 3, a rotary control member 10 encircles the body 3 and has a cam surface 12 on an underside thereof. The rotary control member 10 is rotatable about an axis 14 running longitudinally through the body 3.

The cam surface 12 comprises a series of peaks and troughs.

The thermostatic mixer valve 2 is configured to receive, in use, a flow of hot water and a flow of cold water. The body 3 comprises two inlets 16, 18, each configured to receive either the flow of hot water or the flow of cold water. The inlets 16, 18 are disposed at the second end 8 of the body 3 and are configured such that water flows through the inlets in a direction substantially parallel to the axis of rotation 14 of the rotary control member 10.

The thermostatic mixer valve 2 comprises a mixing chamber with two mixer valve inlets, one for receiving the flow of hot water and the other for receiving the flow of cold water. A mixer valve outlet leads from the mixing chamber to convey, in use, a flow of water having a user-specified temperature. A rotary control means 20 is provided to allow the user to set and adjust the user-specified temperature.

A first operating member 22 and second operating member 24 are arranged at opposing sides of the body 3. The operating members 22, 24 comprise substantially rigid elongate members and are arranged to move linearly along an axis parallel to the axis of rotation 14 of the rotary control member 10.

A control lever 26, 28 is disposed below each of the operating members 22, 24. Each control lever 26, 28 comprises a lever arm 30, 32 and a shaft 34, 36. Each lever arm 30, 32 extends away from and is arranged perpendicularly to the respective shaft 34, 36. Each control lever 26, 28 is arranged to rotate about an axis running longitudinally through the respective shaft 34, 36.

The operating members 22, 24 comprise a first end and a second end, with the first end arranged to contact the cam surface 12 of the rotary control member 20 and the second end arranged to contact a respective lever arm 30, 32.

A first valve 46 and a second valve 48 are disposed towards the second end of the body 3. Each valve comprises a valve inlet and a valve outlet 50, 52. Each valve comprises a valve member 62, 64 operable to control the flow of water through the respective valve outlet 50, 52. Each valve inlet is in fluid communication with the mixer valve outlet.

Each valve outlet 50, 52 is configured to convey a flow of water from a valve 46, 48 to a separate body outlet 54, 56 disposed on the body 3. The body outlets 54, 56 are disposed between the second end 8 of the body 3 and the rotary control member 10. The body outlets 54, 56 are arranged to convey fluid from the body 3 in a direction substantially perpendicular to the axis of rotation 14 of the rotary control member 10.

Each shaft 34, 36 is arranged to extend from the associated lever arm 30, 32 and is received into a lower portion of a valve 46, 48. Each valve member 62, 64 is configured to be moved from the open position to the closed position and vice versa by rotation of the shaft 34, 36.

The cam surface 12 comprises a wave pattern configured such that a user can select whether neither, either or both of the first valve 46 and the second valve 48 is/are open by rotating the rotatable control member 10. When the first end of an operating member 22, 24 is in contact with a trough portion of the cam surface 12, the associated valve 46, 48 is in a closed configuration. When the first end of an operating member 22, 24 is in contact with a peak portion of the cam surface 12, the associated valve 46, 48 is in an open configuration.

A second control lever 58, 60 is disposed within each valve 46, 48 and is attached to the shaft 34, 36 such that rotation of the shafts 34, 36 causes rotation of the respective second control lever 58, 60. The second control levers 58, 60 are configured to move a valve member 62, 64 into and out of a valve outlet sealing configuration. In a sealed configuration, water is prevented from flowing through the valve outlet 50, 52. In an un-sealed configuration, water may flow through the valve outlet 50, 52.

The valve members 62, 64 are biased towards the sealed configuration by a resilient member. A spring 66, 68 is used as the resilient member to bias each of the valve members 62, 64. The springs 66, 68 are configured to urge the valve members 62, 64 into the closed configuration.

The operating members 22, 24 are biased towards the sealed configuration by further resilient members. An operating member spring 70 is used as the further resilient member to bias the first operating member 22 in a direction towards the rotary control member 10. Another operating member spring (not shown) is used as the further resilient member to bias the second operating member 24 in a direction towards the rotary control member 10.

In some embodiments the fluid control device may not comprise the springs 66, 68. In some embodiments the fluid control device may not comprise the operating member springs 70.

The fluid control device 1 also comprises a frame 80 arranged to extend around a portion of the fluid control device 1. The frame 80 is configured to extend over a portion of the operating members 22, 24 and as such, helps prevent unwanted lateral movement. The frame 80 may also be configured to cooperate with the operating member springs.

In some embodiments, the valve member 62, 64 comprises a diaphragm valve. In such embodiments, the second control lever 58, 60 is operable to control movement of the diaphragm valve between an open and closed configuration. The opening and closing of the diaphragm valve is arranged to cause opening and closing of the valve member 62, 64.

In use, a user may rotate the rotary control member 10 either clockwise or anticlockwise. Rotation of the rotary control member 10 causes movement of the cam surface 12 with respect to the first end of the operating members 22, 24. The rotary control member 10 may be rotated through a first rotation to open one or both of the valves 46, 48.

When the rotary control member 10 is rotated such that the portion of the cam surface 12 in contact with the first end of an operating member 22, 24 moves from a trough to a peak, the operating member 22, 24 is urged in a linear direction towards the second end of the body 3, and vice versa. As such, the operating members 22, 24 are either urged towards the second end of the body 3 when in contact with a peak of the cam surface 12, or allowed to move towards the first end 6 of the body 3 when in contact with a trough portion of the cam surface 12.

When an operating member 46, 48 is urged towards the second end 8 of the body 3, the second end of the operating member 46, 48 acts on the associated lever arm 30, 32 such that the lever arm 30, 32 rotates towards the second end 8 of the body 3.

Rotation of a lever arm 30, 32 towards the second end of the body 3 rotates the connected shaft 34, 36 which in turn rotates the connected second control lever 58, 60 disposed within the body 3 of a valve 46, 48.

Rotation of a second control lever 58, 60 towards the second end of the body 3 causes the second control lever 58, 60 to act on the valve member 62, 64 such that the valve member 62, 64 moves towards the second end of the body 3 and away from the associated valve outlet 50, 52. Movement of a valve member 62, 64 away from a valve outlet 50, 52 moves the valve member 62, 64 into the open configuration such that a flow of water may pass through the valve outlet.

In embodiments comprising a diaphragm valve, a diaphragm valve is disposed within each valve 46, 48 and is arranged to move between an open and closed position. The second control lever 58, 60 is operable to move the diaphragm valve between an open and closed position.

When in the open position, the diaphragm valve allows water to flow therethrough and towards the associated valve member 62, 64. The flow of water applies a force on the valve member 62, 64 such that the valve member 62, 64 is urged from the closed position to the open configuration.

Rotation of a second control lever 58, 60 back towards the second end 8 of the body 3 causes the diaphragm valve to return to a sealed configuration. Sealing of the diaphragm valve prevents a flow of water therethrough, and as such stops the flow of water flowing through the valve outlet 50, 52.

The spring applies a continuous force on the valve member 62, 64 in the direction of the first end 6 of the body 3 and urges the valve member 62, 64 towards the closed configuration. The force applied by the spring to the valve member 62, 64 therefore acts on the second control lever 58, 60, biasing the second control lever 58, 60 towards the first end 6 of the body 3.

The biasing force acting on the second control lever 58, 60 is transmitted through the shaft 34, 36 such that is also acts on the lever arm 30, 32. The force acting on the lever arm 30, 32 is therefore applied to the second end of the operating member 22, 24, which biases the operating member 22, 24 towards the cam surface 12. This biasing force maintains the contact between the lever arm 30, 32 and the second end of the operating member 22, 24, and also maintains the contact between the first end of the operating member 22, 24 and the cam surface 12.

In use, when the rotary control member 10 is rotated such that the portion of the cam surface 12 in contact with the first end of an operating member 22, 24 moves from a peak to a trough, the operating member 22, 24 is biased such that it moves towards the first end 6 of the body 3.

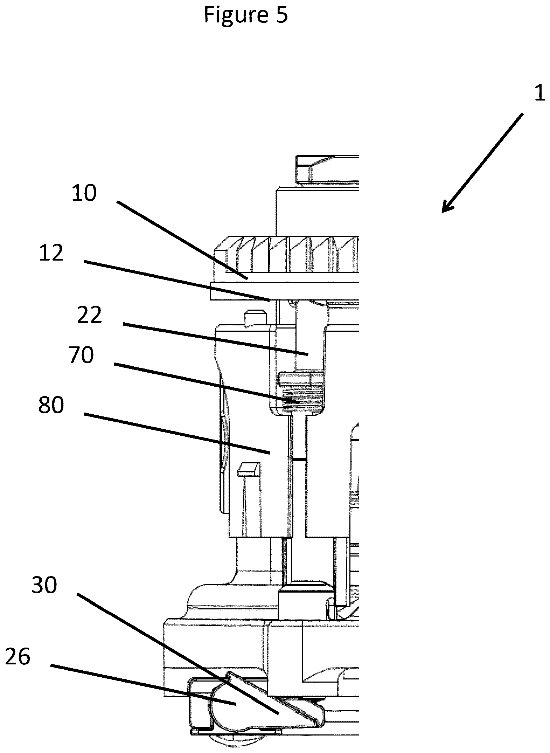

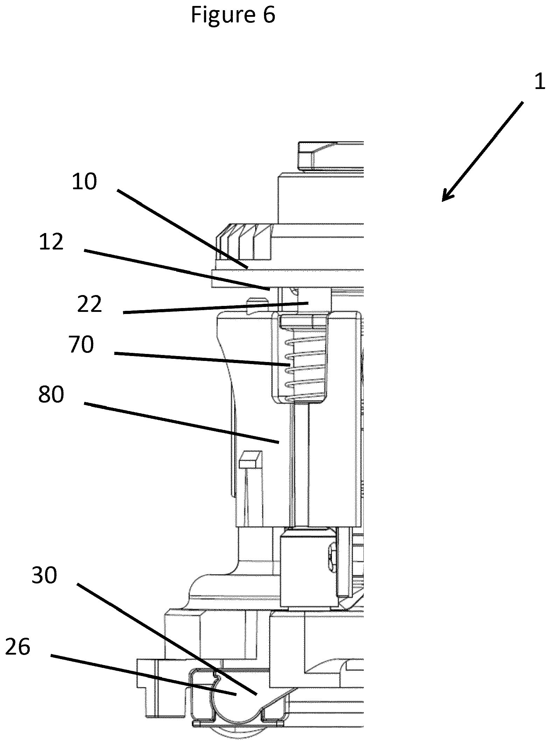

Figures 5 and 6 each show a side view of half the fluid control device 1. Figure 5 shows the fluid control device 1 with a valve in an open position and figure 6 shows the fluid control device 1 with a valve in a closed position.

The control lever 26 is shown disposed below the operating member 22 and the control lever 26 comprises the lever arm 30. The first end of the operating member 22 can be seen contacting the cam surface 12 of the rotary control member 10 and the second end is arranged to contact the respective lever arm 30.

In figure 5, the rotary control member 10 has been rotated such that the cam surface 12 has forced the operating member 22 in the direction of the control lever 26. In this way, the operating member spring 70 has been compressed. As the operating member spring 70 is arranged to bias the operating member 22 in a direction towards the rotary control member 10, the first end of the operating member 22 remains in contact with the cam surface 12 throughout operation.

In figure 6, the rotary control member 10 has been rotated such that the cam surface 12 allows the operating member 22 to move in the direction of the control lever 26. In this way, the operating member spring 70 assists in biasing the operating member towards the cam surface 12. As the operating member spring 70 is arranged to bias the operating member 22 in a direction towards the rotary control member 10, the first end of the operating member 22 remains in contact with the cam surface 12 throughout operation.

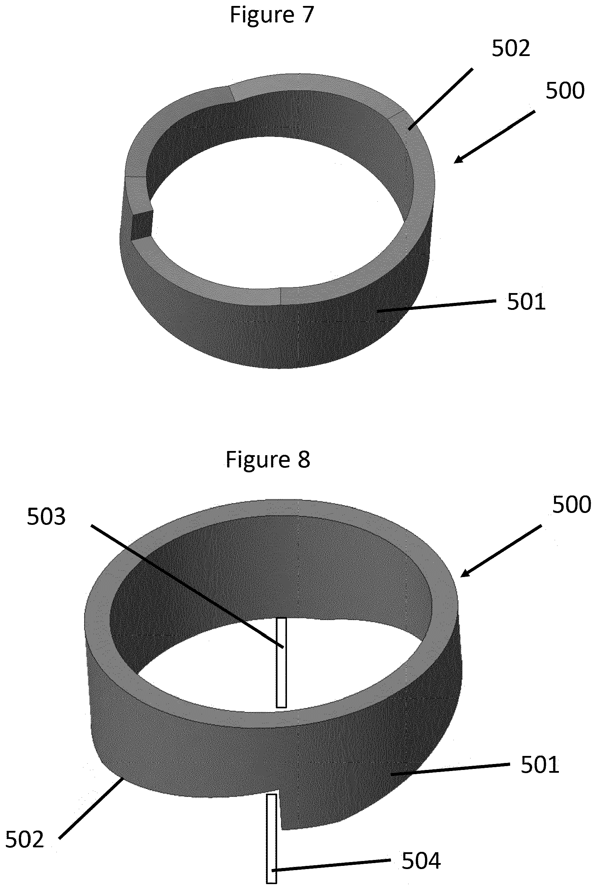

Figure 7 shows schematically an example embodiment of a rotary control member 500 for use in a flow control device according to the present disclosure, e.g. the flow control device 1 described above. The rotary control member 500 comprises an annular body 501 with a cam surface 502 on an underside thereof. The annular body 501 may be adapted in any suitable way to facilitate manual rotation of the rotary control member 500. The cam surface 502 has a series of peaks and troughs arranged to enable selective operation of one or more valves, as described below.

Figure 8 shows the rotary control member 500 with an end of a first operating member 503 and an end of a second operating member 504 abutting the cam surface 502. The first operating member 503 and the second operating member 504 each have the form of a rod and extend away from the cam surface 502. At their other ends, the first operating member 503 and the second operating member 504 each engage with a control lever (not shown) arranged to open and close a valve (not shown) in response to rotation of the rotary control member 500. In an example implementation, the cam surface 502 may be configured such that none, either one or both of the valves may be open at a given time.

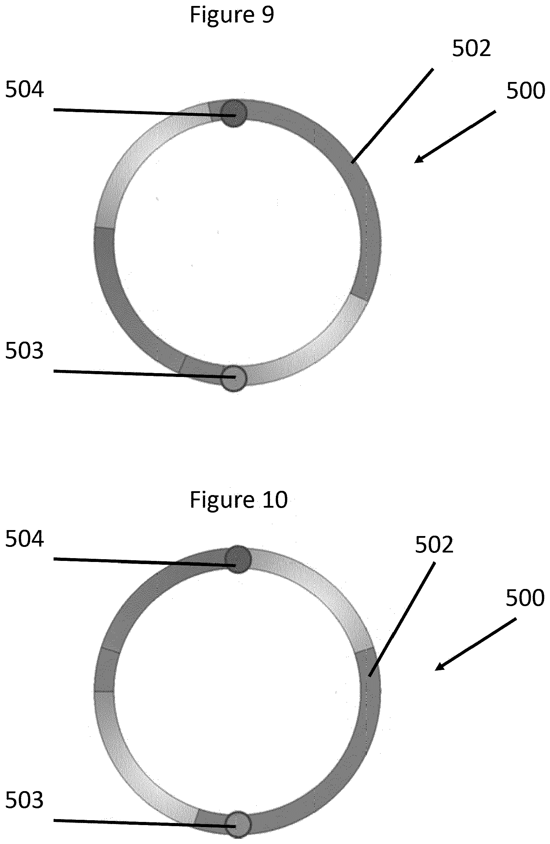

Figures 9, 10 and 11 illustrate schematically operation of the rotary control member 500. In Figure 10, the rotary control member 500 is in a central position. Figure 9 shows the rotary control member 500 rotated 85° anticlockwise from the central position. Figure 10 shows the rotary control member 500 rotated 85° clockwise from the central position.

The cam surface 502 is configured such that when the rotary control member 500 is in the central position (i.e. as shown in Figure 10), the second operating member 504 is urged downwards to engage the control lever to open the valve associated therewith.

The cam surface 502 is configured such that when the rotary control member 500 is in the central position (i.e. as shown in Figure 10), the first operating member 503 is not urged into engagement with the control lever and the valve associated therewith consequently remains closed.

When the rotary control member 500 is in the position shown in Figure 9, the cam surface 502 is configured such that both the first operating member 503 and the second operating member 504 are urged downwards to engage respective control levers to open the respective valves associated therewith.

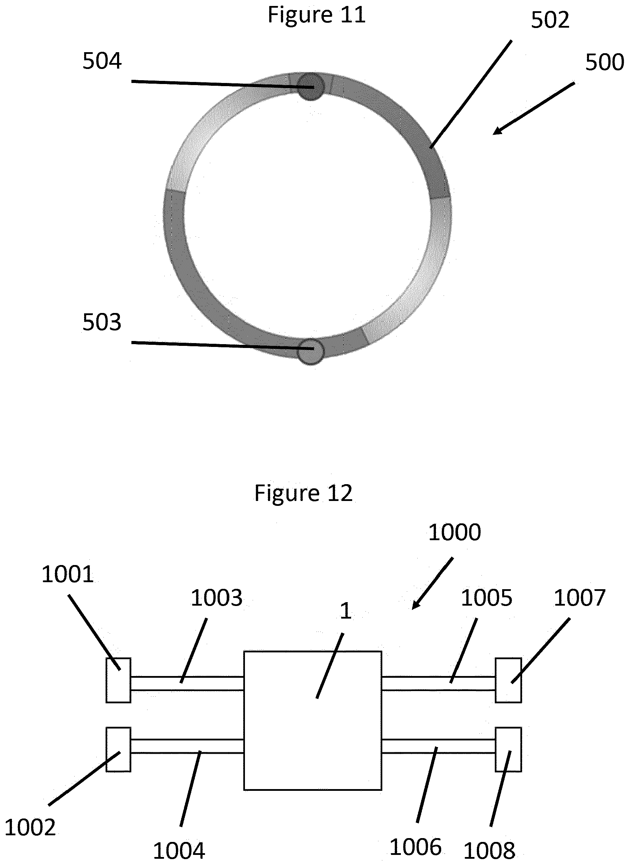

When the rotary control member 500 is in the position shown in Figure 11, the cam surface 502 is configured such that the first operating member 503 is urged downwards to engage the control lever to open the valve associated therewith. The cam surface 502 is configured such that when the rotary control member 500 is in the position shown in Figure 11, the second operating member 504 is not urged into engagement with the control lever and the valve associated therewith consequently remains closed.

Figure 12 illustrates an ablutionary system 1000 including the fluid control device 1. The fluid control device 1 receives a flow of hot water from a hot water source 1001 such as a boiler via a hot water supply pipe 1003. The fluid control device 1 also receives a flow of cold water from a cold water source 1002 such as a mains water supply via a cold water supply pipe 1004. Downstream of the fluid control device 1, a first delivery conduit 1005 leads to a first fluid delivery device 1007. A second fluid delivery conduit 1006 leads to a second fluid delivery device 1008.

For example, the first fluid delivery device 1007 may comprise a spray head for a shower and the second fluid delivery device 1008 may comprise a faucet or vice versa. In another example, the first fluid delivery device 1007 may comprise a fixed showerhead and the second fluid delivery device 1008 may comprise a hand-held showerhead or vice versa.

By operating the fluid control device 1, a user may be able to control the flow of water such that water may be selectively delivered by none, either one or both of the first fluid delivery device 1007 and the second fluid delivery device 1008. The fluid control device 1 thus functions as a diverter. The user may also be able to use the fluid control device 1 to control the temperature of the water being delivered.

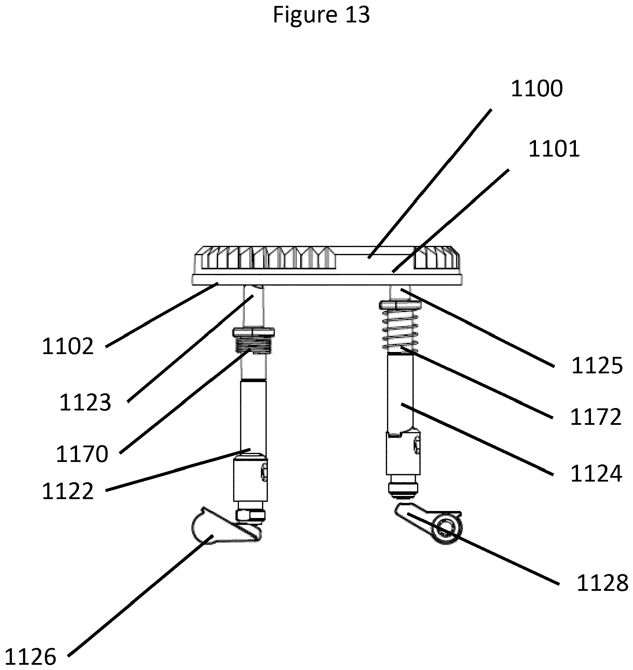

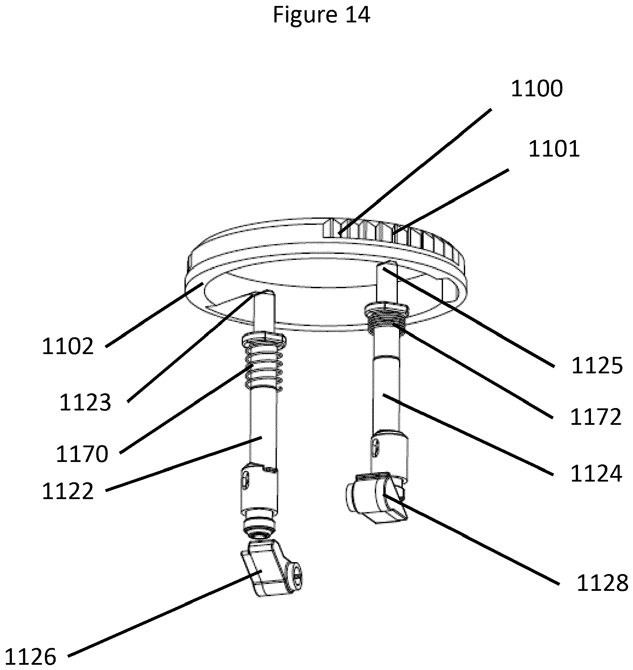

Figures 13 and 14 show an example embodiment of a rotary control member 1100 for use in a flow control device according to the present disclosure, e.g. the flow control device 1 described above. The rotary control member 1100 comprises an annular body 1101 with a cam surface 1102 on an underside thereof. The annular body 1101 may be adapted in any suitable way to facilitate manual rotation of the rotary control member 1100. The cam surface 1102 has a series of peaks and troughs arranged to enable selective operation of one or more valves, as described below.

Abutting the cam surface 1102 is a first end 1123 of a first operating member 1122 and a first end 1125 of a second operating member 1124. The first operating member 1122 and the second operating member 1124 each have the form of a rod and extend away from the cam surface 1102. At their other ends, the first operating member 1122 and the second operating member 1124 each engage with a control lever 1126, 1128 arranged to open and close a valve (not shown) in response to rotation of the rotary control member 1100. In an example implementation, the cam surface 1102 may be configured such that none, either one or both of the valves may be open at a given time.

Each operating member 1122, 1124 is resiliently biased towards the rotary control member 1100 by a spring 1170, 1172. Each spring 1170, 1172 provides a biasing force that assists in maintaining contact between the first end 1123 of the first operating member 1122 and the first end 1125 of a second operating member 1124 with the cam surface 1102.

Various modifications may be made to the example fluid delivery device and/or ablutionary system described herein.

For example, the extent of rotation required to switch the setting of the valve(s) may be any suitable angular amount, e.g. at least 10°, up to or at least 30°, up to or at least 45°, up to or at least 60°, up to or at least 90° or up to or at least 120°.

For example, the fluid delivery device need not include a thermostatic mixer valve. The fluid delivery device may comprise a non-thermostatic mixer valve instead, e.g. a mechanical mixer valve.

As another example, the fluid delivery device may not include a mixer valve of any sort. The fluid delivery device may be adapted to receive a flow of water from a single source, e.g. a mains water supply. Any suitable heating means may be employed to heat the flow of water to a user-selected temperature.

The fluid delivery device may be adapted to provide user control and/or selection of any number of fluid delivery devices downstream of the fluid delivery device. The fluid delivery device may be arranged to provide user control and/or selection of a plurality of spray modes from a given fluid delivery device.

It will be understood that the invention is not limited to the embodiments described above. The invention is defined by the appended claims.

## Claims

1. A fluid control device (1) for an ablutionary fitting comprising:
a rotary control member (10) comprising a cam surface (12);
a first valve (46) comprising a valve member (62);
a first valve actuator; and
an operating member (22);
wherein, in use, the rotary control member (10) is rotatable such that the cam surface (12) drives the operating member (22) in a linear direction and the operating member (22) acts in turn on the first valve actuator to move the valve member (62) from an open position to a closed position and vice versa, wherein the cam surface (12) is configured such that, by rotating the rotary control member (10), in use, a user can select whether the first valve (46) is open or closed; and
wherein the first valve actuator comprises a control lever (26); and
wherein the operating member (22) comprises a first end and a second end, wherein the first end is arranged to contact the cam surface (12) and the second end is arranged to contact the first valve actuator.

2. A fluid control device according to claim 1, wherein the cam surface (12) comprises a series of peaks and troughs, including at least one peak and at least one trough.

3. A fluid control device (1) according to claim 2, wherein the cam surface (12) comprises a regular, or an irregular, pattern of peaks and troughs.

4. A fluid control device (1) according to claim 1, claim 2 or claim 3, wherein the cam surface (12) is arranged such that when a user rotates the rotary control member (10) through up to or at least 30°, up to or at least 45°, up to or at least 60°, up to or at least 90°, up to or at least 120° or up to 180°, the valve member (62) moves from the open position to the closed position, or vice versa.

5. A fluid control device (1) according to any preceding claim, wherein the control lever (26) comprises a lever arm (30) extending from near to or at a first end of a shaft (34).

6. A fluid control device (1) according to claim 5, wherein the control lever (26) is fixedly connected to the shaft (34) such that rotation of the control lever (26) causes rotation of the shaft (34), and vice versa.

7. A fluid control device (1) according to any one of the preceding claims comprising a second valve (48) comprising a valve member (64); a second valve actuator; and a second operating member (24); wherein, in use, the rotary control member (10) is rotatable such that the cam surface (12) drives the second operating member (24) in a linear direction and the second control member acts in turn on the second valve actuator to move the valve member (64) of the second valve (48) from an open position to a closed position and vice versa, wherein the cam surface (12) is configured such that, by rotating the rotary control member (10), in use, a user can select whether the second valve is open or closed

8. A fluid control device (1) according to claim 7, wherein the cam surface (12) is configured such that, by rotating the rotary control member (10), in use, a user can select whether none, either or both of the first valve (46) and the second valve (48) are open at a given time.

9. A fluid control device (1) according to any one of the preceding claims comprising a mixer valve, wherein the first valve (46) is arranged to receive a flow of water from the mixer valve.

10. An ablutionary fitting comprising a fluid control device (1) according to any one of claims 1 to 9.

11. An ablutionary system comprising:
a fluid control device (1) according to any one of claims 1 to 9; and
at least one fluid delivery device downstream of the fluid control device (1).

## Patentansprüche

1. Fluidsteuervorrichtung (1) für eine Wascharmatur, umfassend:
ein Drehsteuerelement (10), das eine Nockenfläche (12) umfasst;
ein erstes Ventil (46), das ein Ventilelement (62) umfasst;
eine erste Ventilbetätigungsvorrichtung; und
ein Bedienelement (22);
wobei das Drehsteuerelement (10) bei Verwendung so drehbar ist, dass die Nockenfläche (12) das Bedienelement (22) in einer linearen Richtung antreibt und das Bedienelement (22) wiederum auf die erste Ventilbetätigungsvorrichtung einwirkt, um das Ventilelement (62) von einer offenen Position in eine geschlossene Position und umgekehrt zu bewegen, wobei die Nockenfläche (12) so konfiguriert ist, dass ein Benutzer bei Verwendung durch Drehen des Drehsteuerelements (10) auswählen kann, ob das erste Ventil (46) offen oder geschlossen ist; und
wobei die erste Ventilbetätigungsvorrichtung einen Steuerhebel (26) umfasst; und
wobei das Bedienelement (22) ein erstes Ende und ein zweites Ende umfasst, wobei das erste Ende dazu angeordnet ist, die Nockenfläche (12) zu berühren, und das zweite Ende dazu angeordnet ist, die erste Ventilbetätigungsvorrichtung zu berühren.

2. Fluidsteuervorrichtung nach Anspruch 1, wobei die Nockenfläche (12) eine Reihe von Erhebungen und Vertiefungen umfasst, einschließlich mindestens einer Erhebung und mindestens einer Vertiefung.

3. Fluidsteuervorrichtung (1) nach Anspruch 2, wobei die Nockenfläche (12) ein regelmäßiges oder unregelmäßiges Muster aus Erhebungen und Vertiefungen umfasst.

4. Fluidsteuervorrichtung (1) nach Anspruch 1, Anspruch 2 oder Anspruch 3, wobei die Nockenfläche (12) so angeordnet ist, dass, wenn ein Benutzer das Drehsteuerelement (10) um bis zu oder mindestens 30°, bis zu oder mindestens 45°, bis zu oder mindestens 60°, bis zu oder mindestens 90°, bis zu oder mindestens 120° oder bis zu 180° dreht, sich das Ventilelement (62) von der offenen Position in die geschlossene Position oder umgekehrt bewegt.

5. Fluidsteuervorrichtung (1) nach einem vorstehenden Anspruch, wobei der Steuerhebel (26) einen Hebelarm (30) umfasst, der sich von nahe einem ersten Ende einer Welle (34) oder an diesem erstreckt.

6. Fluidsteuervorrichtung (1) nach Anspruch 5, wobei der Steuerhebel (26) fest mit der Welle (34) so verbunden ist, dass eine Drehung des Steuerhebels (26) eine Drehung der Welle (34) und umgekehrt bewirkt.

7. Fluidsteuervorrichtung (1) nach einem der vorstehenden Ansprüche, die ein zweites Ventil (48), das ein Ventilelement (64); eine zweite Ventilbetätigungsvorrichtung und ein zweites Bedienelement (24) umfasst; wobei das Drehsteuerelement (10) bei Verwendung so drehbar ist, dass die Nockenfläche (12) das zweite Bedienelement (24) in einer linearen Richtung antreibt und das zweite Steuerelement wiederum auf die zweite Ventilbetätigungsvorrichtung einwirkt, um das Ventilelement (64) des zweiten Ventils (48) von einer offenen Position in eine geschlossene Position und umgekehrt zu bewegen, wobei die Nockenfläche (12) so konfiguriert ist, dass ein Benutzer bei Verwendung durch Drehen des Drehsteuerelements (10) auswählen kann, ob das zweite Ventil offen oder geschlossen ist.

8. Fluidsteuervorrichtung (1) nach Anspruch 7, wobei die Nockenfläche (12) so konfiguriert ist, dass ein Benutzer bei Verwendung durch Drehen des Drehsteuerelements (10) auswählen kann, ob zu einem bestimmten Zeitpunkt keines, eines oder beide des ersten Ventils (46) und/oder des zweiten Ventils (48) offen sind.

9. Fluidsteuervorrichtung (1) nach einem der vorstehenden Ansprüche, die ein Mischventil umfasst, wobei das erste Ventil (46) so angeordnet ist, einen Wasserfluss von dem Mischventil zu empfangen.

10. Wascharmatur, die eine Fluidsteuervorrichtung (1) nach einem der Ansprüche 1 bis 9 umfasst.

11. Waschsystem, umfassend:
eine Fluidsteuervorrichtung (1) nach einem der Ansprüche 1 bis 9; und
mindestens eine Fluidabgabevorrichtung stromabwärts der Fluidsteuervorrichtung (1).

## Revendications

1. Dispositif de commande de fluide (1) pour un accessoire d'ablutions, comprenant :
un élément de commande rotatif (10) comprenant une surface de came (12) ;
une première vanne (46) comprenant un élément de vanne (62) ;
un premier actionneur de vanne ; et
un élément fonctionnel (22) ;
dans lequel, en utilisation, l'élément de commande rotatif (10) peut tourner de telle sorte que la surface de came (12) entraîne l'élément fonctionnel (22) dans une direction linéaire et l'élément fonctionnel (22) agit à son tour sur le premier actionneur de vanne pour déplacer l'élément de vanne (62) d'une position ouverte à une position fermée et vice versa, dans lequel la surface de came (12) est configurée de telle sorte qu'en faisant tourner l'élément de commande rotatif (10), en utilisation, un utilisateur puisse sélectionner si la première vanne (46) est ouverte ou fermée ; et
dans lequel le premier actionneur de vanne comprend un levier de commande (26) ; et
dans lequel l'élément de commande (22) comprend une première extrémité et une seconde extrémité, dans lequel la première extrémité est agencée pour venir en contact avec la surface de came (12) et la seconde extrémité est agencée pour venir en contact avec le premier actionneur de vanne.

2. Dispositif de commande de fluide selon la revendication 1, dans lequel la surface de came (12) comprend une série de crêtes et de creux, incluant au moins une crête et au moins un creux.

3. Dispositif de commande de fluide (1) selon la revendication 2, dans lequel la surface de came (12) comprend un motif régulier ou irrégulier de crêtes et de creux.

4. Dispositif de commande de fluide (1) selon la revendication 1, la revendication 2 ou la revendication 3, dans lequel la surface de came (12) est agencée de telle sorte que, lorsqu'un utilisateur fait tourner l'élément de commande rotatif (10) jusqu'à ou d'au moins 30°, jusqu'à ou d'au moins 45°, jusqu'à ou d'au moins 60°, jusqu'à ou d'au moins 90°, jusqu'à ou d'au moins 120° ou jusqu'à 180°, l'élément de vanne (62) se déplace de la position ouverte à la position fermée, ou vice versa.

5. Dispositif de commande de fluide (1) selon une quelconque revendication précédente, dans lequel le levier de commande (26) comprend un bras de levier (30) s'étendant à proximité, ou au niveau, d'une première extrémité d'un arbre (34).

6. Dispositif de commande de fluide (1) selon la revendication 5, dans lequel le levier de commande (26) est raccordé de manière fixe à l'arbre (34) de telle sorte que la rotation du levier de commande (26) provoque la rotation de l'arbre (34), et vice versa.

7. Dispositif de commande de fluide (1) selon l'une quelconque des revendications précédentes, comprenant une seconde vanne (48) comprenant un élément de vanne(64) ; un second actionneur de vanne ; et un second élément fonctionnel (24) ; dans lequel, en utilisation, l'élément de commande rotatif (10) peut tourner de telle sorte que la surface de came (12) entraîne le second élément fonctionnel (24) dans une direction linéaire et que le second élément de commande agisse à son tour sur le second actionneur de vanne pour déplacer l'élément de vanne (64) de la seconde vanne (48) d'une position ouverte à une position fermée et vice versa, dans lequel la surface de came (12) est configurée de telle sorte qu'en faisant tourner l'élément de commande rotatif (10), en utilisation, un utilisateur puisse sélectionner si la seconde vanne est ouverte ou fermée

8. Dispositif de commande de fluide (1) selon la revendication 7, dans lequel la surface de came (12) est configurée de telle sorte qu'en faisant tourner l'élément de commande rotatif (10), en utilisation, un utilisateur puisse sélectionner si aucune, l'une ou l'autre ou les deux de la première vanne(46) et de la seconde vanne (48) sont ouvertes à un moment donné.

9. Dispositif de commande de fluide (1) selon l'une quelconque des revendications précédentes comprenant une vanne de mélangeur, dans lequel la première vanne (46) est agencée pour recevoir un flux d'eau provenant de la vanne de mélangeur.

10. Accessoire d'ablutions comprenant un dispositif de commande de fluide (1) selon l'une quelconque des revendications 1 à 9.

11. Système d'ablutions, comprenant :
un dispositif de commande de fluide (1) selon l'une quelconque des revendications 1 à 9 ; et
au moins un dispositif de distribution de fluide en aval du dispositif de commande de fluide (1).
